# EUROPÄISCHE PATENTSCHRIFT

(11) **EP 0 732 641 B1**
(45) Veröffentlichungstag und Bekanntmachung des Hinweises auf die Patenterteilung: **29.09.1999**
(21) Anmeldenummer: 96103943.5
(22) Anmeldetag: 13.03.1996
(51) Int. Cl.: G05D 1/02, G05D 1/03, A63B 55/08

(54) **Folgesteuerung für ein selbstfahrendes Fahrzeug**
Tracking control for a driverless vehicle
Commande de poursuite pour véhicule sans conducteur

(30) Priorität: 15.03.1995 DE 19509320
(43) Veröffentlichungstag der Anmeldung: 18.09.1996
(73) Patentinhaber: Technologietransfer-Anstalt, T e t r a, 9493 Mauren (LI)
(72) Erfinder: Trainer, Wolfram, Dipl.-Ing., 40474 Düsseldorf (DE)
(74) Vertreter: Selting, Günther, Dipl.-Ing.

(56) Entgegenhaltungen:
- EP-A- 0 219 664
- CA-A- 1 017 827
- GB-A- 2 283 838
- US-A- 4 109 186

## Beschreibung

Die Erfindung betrifft eine Ultraschall-Folgesteuerung für ein selbstfahrendes Fahrzeug, die das Fahrzeug hinter, neben oder vor einer Person oder einem anderen Schrittmacher fahren läßt.

Bekannt sind Golfwagen, in denen die Schläger und das Zubehör eines Golfspielers transportiert werden, sowie Kommissionierfahrzeuge zum Transportieren von Waren in Regallagern. Die Steuerung solcher Fahrzeuge erfolgt durch direkte manuelle Lenkeingriffe eines Mitgängers. Hierdurch sind dessen Aufmerksamkeit und Hände gebunden. Erst wenn das Fahrzeug steht, kann sich die Person ihrer eigentlichen Tätigkeit, nämlich dem Golfspiel oder dem Lesen einer Kommissionierliste oder der Entnahme bzw. dem Einräumen von Artikeln, zuwenden. Nachteilig ist auch die körperliche Belastung der Person durch das Lenken des Fahrzeugs.

Zur Vermeidung dieser Nachteile ist es bekannt, Fahrzeuge mit einer Fernsteuerung zu steuern, die von einer mitgehenden Person betätigt wird. Die Bedienung solcher Fernsteuerungen erfordert erhebliche Übung und Geschick sowie eine hohe Aufmerksamkeit, wodurch der Anwenderkreis stark eingeschränkt wird.

Aus DE 43 26 016 C1 ist ein selbstfahrendes Fahrzeug bekannt, das einem Schrittmacher folgt. Zu diesem Zweck ist eine Hochfrequenz-Peileinrichtung vorgesehen, die dann wirksam ist, wenn der Abstand zwischen dem Fahrzeug und dem Sender eine vorbestimmte Distanz übersteigt und deren Aufgabe es ist, die Richtung zu ermitteln, in der sich vom Fahrzeug aus gesehen der Schrittmacher befindet. Ferner ist eine Ultraschall-Peileinrichtung vorhanden, die sowohl die Richtung des Schrittmachers als auch den jeweiligen Abstand zwischen dem Fahrzeug und dem Schrittmacher ermittelt. Diese Ultraschall-Peileinrichtung führt eine reine Intensitätsmessung aus. Der Schrittmacher ist mit einem Sender für Ultraschallsignale versehen, während das Fahrzeug ein Ultraschall-Empfangssystem mit zwei empfangenden Ultraschalleinheiten enthält. Die Schalldruckkennlinien eines Ultraschallsenders verlaufen in der Regel nicht radial zum Sender, sondern sie können eine unregelmäßige Form aufweisen. Dadurch werden falsche Richtungsbestimmungen im Empfangssystem durchgeführt. Ferner nimmt die Genauigkeit der Intensitätsmessung mit zunehmendem Abstand stark ab. Diese Umstände führen dazu, daß das Fahrzeug dem Schrittmacher nicht immer auf dem geradesten und kürzesten Weg folgt.

Bekannt sind ferner Folgesteuerungen, die mit Hochfrequenzsignalen arbeiten. Solche Folgesteuerungen basieren in der Regel ebenfalls auf Intensitätsmessungen der empfangenden Strahlung, wobei die am Fahrzeug von zwei Empfangseinheiten empfangenen Amplitudensignale für die Entfernungsmessung addiert und für die Richtungsmessung voneinander subtrahiert werden. Solche Folgesysteme haben ebenfalls relativ große Ungenauigkeiten und sie sind in der Realisierung äußerst aufwendig.

Der Erfindung liegt die Aufgabe zugrunde, eine Ultraschall-Folgesteuerung zu schaffen, die imstande ist, ein selbstfahrendes Fahrzeug einem Schrittmacher mit hoher Präzision und Sicherheit nachzuführen.

Die Lösung dieser Aufgabe erfolgt erfindungsgemäß mit den im Patentanspruch 1 angegebenen Merkmalen.

Bei der erfindungsgemäßen Ultraschall-Folgesteuerung ist am Fahrzeug eine erste Steuereinheit angebracht, die mindestens zwei Ultraschalleinheiten mit jeweils einer Sende- und Empfangsvorrichtung aufweist. Eine vom Fahrzeug unabhängige mobile zweite Steuereinheit, die im Signalaustausch mit der ersten Steuereinheit steht, kann von einer Person oder einem anderen Schrittmacher mitgeführt werden. Die Folgesteuerung bewirkt, daß das Fahrzeug dem Schrittmacher selbsttätig folgt, wobei es entweder hinter diesem oder seitlich versetzt neben diesem her fährt. Die seitlich versetzt am Fahrzeug angebrachten Ultraschalleinheiten führen durch Laufzeitmessung sehr genaue Abstandsmessungen in bezug auf den Schrittmacher durch, so daß mit ihnen der Abstand des Schrittmachers vom Fahrzeug und die Richtung des Schrittmachers in bezug auf das Fahrzeug bestimmt werden kann. In Abhängigkeit von Abstand und Richtung des Schrittmachers wird das Fahrzeug so angetrieben und gelenkt, daß es einen vorbestimmten Abstand und eine vorbestimmte Richtung zum Schrittmacher einnimmt. Dadurch wird erreicht, daß das Fahrzeug in vorgegebenem Abstand hinter, neben oder auch vor dem Schrittmacher her fährt. Der Schrittmacher kann entweder eine Person sein, die sich gehend bewegt, oder auch ein anderes Fahrzeug. Die mobile Steuereinheit ist so ausgebildet, daß sie leicht am Körper einer Person getragen werden kann, z.B. an einem Gürtel oder Halter.

Die drahtlose Kommunikation zwischen den beiden Steuereinheiten erfolgt ausschließlich über Ultraschallsignale, die sich ungerichtet ausbreiten, wobei der zeitliche Abstand zwischen dem Aussenden eines Signals vom Fahrzeug und dem Empfang des Antwortsignals am Fahrzeug bestimmt wird. Durch die beiden empfangenden Ultraschalleinheiten der ersten Steuereinheit erhält man zwei Laufzeiten (jeweils eine für eine der Ultraschalleinheiten). Beide Laufzeiten geben Aufschluß über die Entfernung zwischen der ersten und der zweiten Steuereinheit und ihre Differenz wird zur Bestimmung des Folgewinkels ausgewertet. Der Folgewinkel ist der Winkel zwischen einer Referenzachse des Fahrzeugs und einer Linie, die die beiden Steuereinheiten verbindet.

Generell kann die zweite Steuereinheit mit einem einzigen Transponder ausgestattet sein, der mit jeder der Ultraschalleinheiten der ersten Steuereinheit korrespondiert. Dabei müssen die Ultraschalleinheiten der ersten Steuereinheit jedoch zeitlich nacheinander betrieben werden, wobei die zeitlichen Abstände so groß zu bemessen sind, daß die Antwortsignale jeweils einer Ultraschalleinheit eindeutig zugeordnet werden können.

Eine bessere Lösung besteht darin, in der zweiten Steuereinheit für jede Sendeeinheit der ersten Steuereinheit einen eigenen Transponder vorzusehen, so daß jeweils Paare von Sendeeinheiten und Transpondern bestehen. Jedes Paar kann hierbei mit einer anderen Frequenz betrieben werden. Alternativ ist es möglich, die Ultraschalleinheiten und Transponder mit unterschiedlichen Frequenzen zu betreiben.

Die erfindungsgemäße Folgesteuerung eignet sich insbesondere für Golfwagen, jedoch auch für andere Fahrzeuge, wie z.B. Kommissionierfahrzeuge für die Lagerhaltung. In der Regel muß damit gerechnet werden, daß mehrere oder sogar zahlreiche selbstfahrende Fahrzeuge in räumlicher Nähe miteinander betrieben werden. Dabei muß verhindert werden, daß die Folgesteuerung des einen Fahrzeugs die Folgesteuerung des anderen Fahrzeugs beeinflußt. Eine solche Entkopplung der Folgesteuerungen ist durch Wahl unterschiedlicher Frequenzen von Fahrzeug zu Fahrzeug nur beschränkt möglich, weil nur eine begrenzte Anzahl von Trägerfrequenzen zur Verfügung steht und die Gefahr besteht, daß zwei Fahrzeuge, deren Folgesteuerungen mit derselben Trägerfrequenz arbeiten, zufällig in gegenseitige Reichweite der Übertragungssysteme gelangen. Um gegenseitige Beeinflussungen auszuschließen, können in jeder Folgesteuerung die Impulssignale nach einem eigenen Impulsmuster ausgesandt werden, das sowohl in der ersten als auch in der zweiten Steuereinheit gespeichert ist, wobei die Zeitabstände der Impulse eine charakteristische Sequenz bilden. Die zweite Steuereinheit reagiert ausschließlich auf die Sequenz des ihr zugeordneten Fahrzeugs. Selbst wenn Signale anderer Fahrzeuge von der zweiten Steuereinheit empfangen werden, reagiert diese hierauf nicht, d.h. sie antwortet auf derartige Fremdsignale, die nicht in die vorgegebene Frequenz hineinpassen, nicht.

Nach der Erfindung folgt das Fahrzeug durch die Wirkung der Folgesteuerung einem mit der zweiten Steuereinrichtung ausgestatteten Schrittmacher ständig. Wenn der Schrittmacher sich von dem ihm folgenden Fahrzeug trennen will, muß er lediglich den Transponder abschalten. Dieser liefert dann keine Antwortsignale mehr an das Fahrzeug und das Fahrzeug bleibt infolge des Ausbleibens der Antwortsignale stehen. Es ist also nicht nötig, manuelle Eingriffe im Fahrzeug vorzunehmen, um das Fahrzeug stillzusetzen.

Um Kollisionen von Fahrzeugen untereinander zu vermeiden oder zu verhindern, daß das Fahrzeug gegen ein Hindernis fährt, können die Fahrzeuge mit Abstandssensoren ausgestattet sein, die das Stillsetzen des Antriebs bewirken, wenn das Fahrzeug in die Nähe eines anderen Fahrzeugs oder eines Hindernisses gelangt.

Im folgenden werden unter Bezugnahme auf die Zeichnungen Ausführungsbeispiele der Erfindung näher erläutert.

Es zeigen:
- Fig. 1: eine schematische Draufsicht auf eine erste Ausführungsform der Steuerung,
- Fig. 2: eine schematische Draufsicht auf eine zweite Ausführungsform der Steuerung,
- Fig. 3: ein Zeitdiagramm der charakteristischen Sequenzen mehrerer Folgesteuerungen,
- Fig. 4: eine Darstellung von drei Golfspielern, denen jeweils ein Fahrzeug mit anderer Einstellung der Folgeparameter nachfolgt, und
- Fig. 5: eine schematische Draufsicht des Fahrgestells eines Golfwagens.

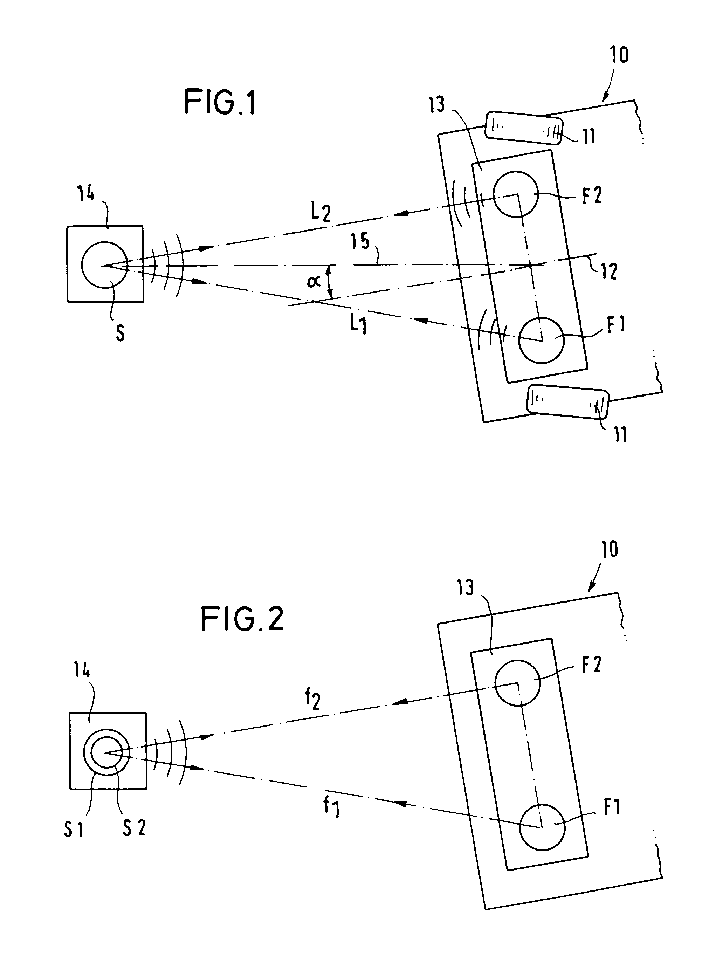

Gemäß Fig. 1 ist ein Fahrzeug 10 vorgesehen, das lenkbare Vorderräder 11 aufweist. Die Längsachse des Fahrzeugs ist mit 12 bezeichnet. Das Fahrzeug 10 enthält in seinem Vorderteil die erste Steuereinheit 13, die zwei Ultraschalleinheiten F1 und F2 aufweist. Diese Ultraschalleinheiten sind symmetrisch zur Längsachse 12 angeordnet und haben einen gegenseitigen Abstand von mindestens etwa 50 mm. Jede der Ultraschalleinheiten F1,F2 enthält eine Sende- und Empfangsvorrichtung für Ultraschallwellen. Jede der Ultraschalleinheiten F1,F2 sendet zu einem bestimmten Zeitpunkt einen Ultraschallimpuls aus.

Die Ultraschallimpulse werden von der zweiten Steuereinheit 14 empfangen, die einen Transponder S als Sende- und Empfangseinrichtung enthält. Wenn der Transponder S ein Ultraschallsignal empfängt, liefert er sofort oder nach einer Verzögerungszeit ein Ultraschallsignal, das ausgesandt wird. Dieses Ultraschallsignal wird von beiden Ultraschalleinheiten F1,F2 empfangen. Aus der Laufzeit vom Aussenden des Impulses durch die Ultraschalleinheit F1 bis zum Empfang des Antwort impulses durch die Ultraschalleinheit F1 kann die Länge L1 der Strecke zwischen F1 und S berechnet werden. In gleicher Weise kann aus der Zeitdauer zwischen dem Aussenden eines Impulses durch die Ultraschalleinheit F2 und den Empfang des Antwortimpulses durch dieselbe Ultraschalleinheit die Länge L2 der Strecke zwischen F2 und S ermittelt werden. Aus der Differenz der beiden Längen L1,L2 bzw. der betreffenden Laufzeiten wird der Folgewinkel a berechnet, den die Fahrzeugachse 12 mit der durch beide Steuereinheiten 13,14 hindurchgehenden Geraden 15 bildet.

Es sei angenommen, daß das Fahrzeug dem die zweite Steuereinheit 14 tragenden Schrittmacher unmittelbar folgen soll. In diesem Fall stellt die Steuereinheit 13 die lenkbaren Räder 11 so ein, daß beim Weiterfahren die Fahrzeugachse 12 mit der Linie 15 zur Deckung kommt.

Bei dem Ausführungsbeispiel von Fig. 1 arbeiten die beiden Ultraschalleinheiten F1,F2 und der Transponder S alle mit der gleichen Trägerfrequenz der Ultraschallimpulse. Um eine Unterscheidung zwischen den Ultraschalleinheiten F1 und F2 vornehmen zu können, werden die von diesen Ultraschalleinheiten ausgesandten Impulse zeitlich nacheinander erzeugt, und zwar mit einem solchen zeitlichen Abstand, daß nach jedem Impuls, der von der Ultraschalleinheit F1 ausgesandt wurde, eine hinreichende Zeit zum Empfang des von dem Transponder S ausgesandten Antwortimpulses zur Verfügung steht, bevor die Ultraschalleinheit F2 einen Impuls aussendet.

Bei dem Ausführungsbeispiel von Fig. 2 sind die Frequenzen f1 und f2 der beiden Ultraschalleinheiten F1 und F2 unterschiedlich. Die zweite Steuereinheit 14 enthält zwei Transponder S1,S2, von denen der Transponder S1 mit der Ultraschalleinheit F1 zusammenarbeitet und der Transponder S2 mit der Ultraschalleinheit F2. Hierbei können die Frequenzen f1,f2 von den Ultraschalleinheiten F1,F2 gleichzeitig ausgesandt werden. Trotz des frequenzselektiven Betriebes besteht andererseits auch die Möglichkeit, die Impulse zeitversetzt auszusenden.

Die Transponder S1 und S2 erzeugen den Antwortimpuls immer erst mit einer gewissen Verzögerung nach dem Empfang eines Impulses, damit die betreffende Ultraschalleinheit F1 oder F2 nach dem Aussenden eines Impulses auf Empfang umgeschaltet werden kann. Diese Zeitverzögerung zwischen Empfang eines Impulses und Aussenden des Antwortimpulses hat eine festgelegte konstante Dauer, die bei der Laufzeitberechnung berücksichtigt wird.

Durch unterschiedliche Bemessung der Verzögerungszeiten in den Folgesteuerungen unterschiedlicher Fahrzeuge oder durch unterschiedliche Bemessungen der Zeitintervalle, mit denen die Impulse der beiden Ultraschalleinheiten ausgesandt werden, kann eine Selektion der Fahrzeuge erfolgen, wobei jedes Fahrzeug nur solche empfangenen Impulse auswertet, die in einem diesem Fahrzeug und seinem Transponder zugeordneten Zeitfenster auftreten. Auf diese Weise kann verhindert werden, daß die Signale des einen Folgesystems ein anderes Folgesystem stören. Eine andere Möglichkeit der Selektion besteht darin, die von einer Ultraschalleinheit oder einem Transponder ausgesandten Impulse jeweils nach einer bestimmten Zeit, die charakteristisch für die individuelle Folgesteuerung ist, zu wiederholen, und nur solche Impulse auszuwerten, bei denen der Wiederholungsimpuls innerhalb der festgelegten Zeit erfolgt.

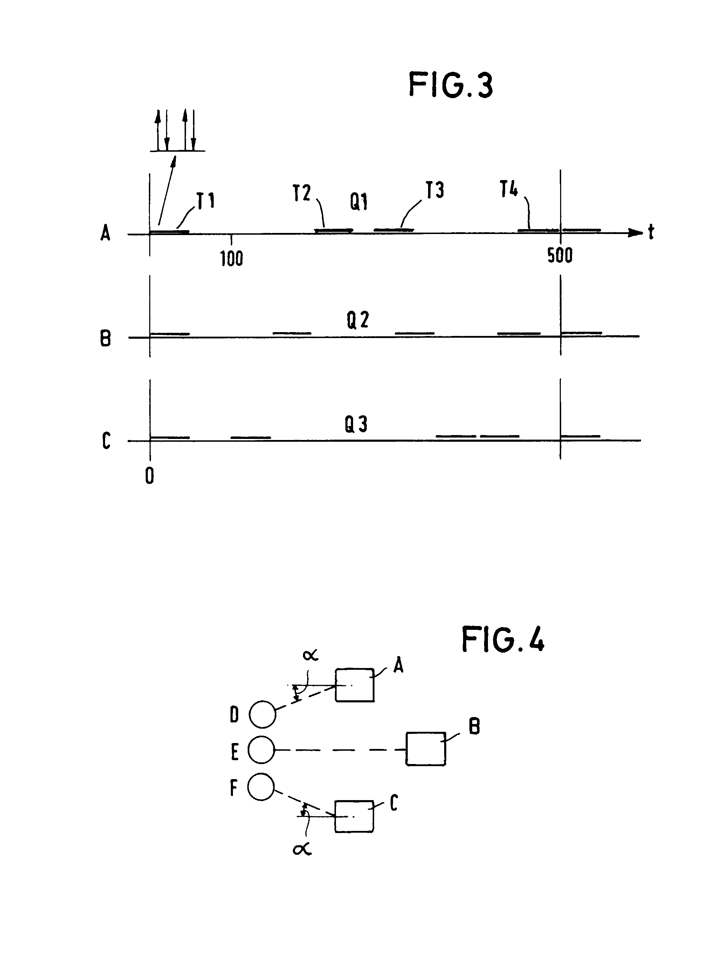

Fig. 3 zeigt eine bevorzugte Ausführungsform der Impulsaussendung durch die Ultraschalleinheiten mehrerer Fahrzeuge A, B und C. Den Ultraschalleinheiten des Fahrzeugs A sind innerhalb einer Periodendauer von z.B. 500 ms verschiedene Aktivzeiten T1, T2, T3 und T4 zugeordnet, die jeweils eine Dauer von etwa 50 ms haben. In jeder Aktivzeit senden die beiden Ultraschalleinheiten F1,F2 des Fahrzeugs Impulse aus, die von den zugehörigen Transpondern S1,S2 beantwortet werden. Die Aktivzeiten T1-T4 haben ungleichmäßige Zeitabstände und sie bilden eine für das Fahrzeug charakteristische Sequenz Q1, die die Periodendauer einnimmt. Nach Ablauf dieser Sequenz Q1 erfolgt eine Wiederholung der gleichen Sequenz. Sowohl im Fahrzeug A als auch in der zugehörigen zweiten Steuereinheit 14 ist die Sequenz Q1 der Aktivzeiten T1-T4 fest gespeichert. Der Transponder reagiert nur auf solche Signale, die in den festgelegten Aktivzeiten T1-T4 empfangen werden. Signale, die in den Intervallen zwischen den Aktivzeiten auftreten, werden unbeantwortet gelassen.

In gleicher Weise bilden die Aktivzeiten des Fahrzeugs B eine charakteristische Sequenz Q2, die sich von der Sequenz Q1 unterscheidet. Die Aktivzeiten eines dritten Fahrzeugs C bilden eine charakteristische Sequenz Q3, die sich von den Sequenzen Q1 und Q2 unterscheidet. Die Auswertung der Signale im Fahrzeug erfolgt erst, wenn in allen Aktivzeiten T1-T4 einer Sequenz Antworten der Transponder S1,S2 von den Ultraschalleinheiten F1,F2 erhalten wurden. Bleibt eine Antwort aus, dann wird das Fahrzeug stillgesetzt.

In Fig. 3 ist der Fall dargestellt, daß die Sequenzen Q1,Q2,Q3 sämtlich zum gleichen Zeitpunkt beginnen. Zweckmäßigerweise sind die Anfangszeitpunkte der Sequenzen jedoch gegeneinander versetzt. Außerdem ist es möglich, am Anfang einer jeden Sequenz ein Initialisierungssignal durch die Ultraschalleinheit auszusenden, das dem Transponder den Sequenzanfang mitteilt.

Die erste Steuereinheit 13 wertet neue Werte von Betrag und Richtung aufgrund eines Signalaustausches mit dem Transponder nur dann aus, wenn sie eine vorgegebene Differenz zwischen den zuletzt geltenden Werten nicht überschreiten. Dadurch wird sichergestellt, daß durch Störungen hervorgerufene "Ausreißer" nicht zu einer Änderung der Fahrzeugsteuerung führen.

In der zweiten Steuereinheit 14 kann der Folgewinkel α (Fig. 1), den bei dem vorbestimmten Abstand die zweite Steuereinheit zur Fahrzeuglängsachse 12 einnimmt, verstellt werden, derart, daß das Fahrzeug 10 der zweiten Steuereinheit 14 mit seitlichem Versatz folgt. Fig. 4 zeigt drei Golfspieler D,E,F, denen jeweils ein Fahrzeug A,B,C, folgt. Damit die Fahrzeuge, auch wenn die Golfspieler dicht nebeneinander gehen, nicht miteinander kollidieren, sind die Folgewinkel α und die Soll-Abstände unterschiedlich eingestellt. Hierbei folgen die Fahrzeuge A und C ihren jeweiligen Schrittmachern D und F mit seitlichem Versatz.

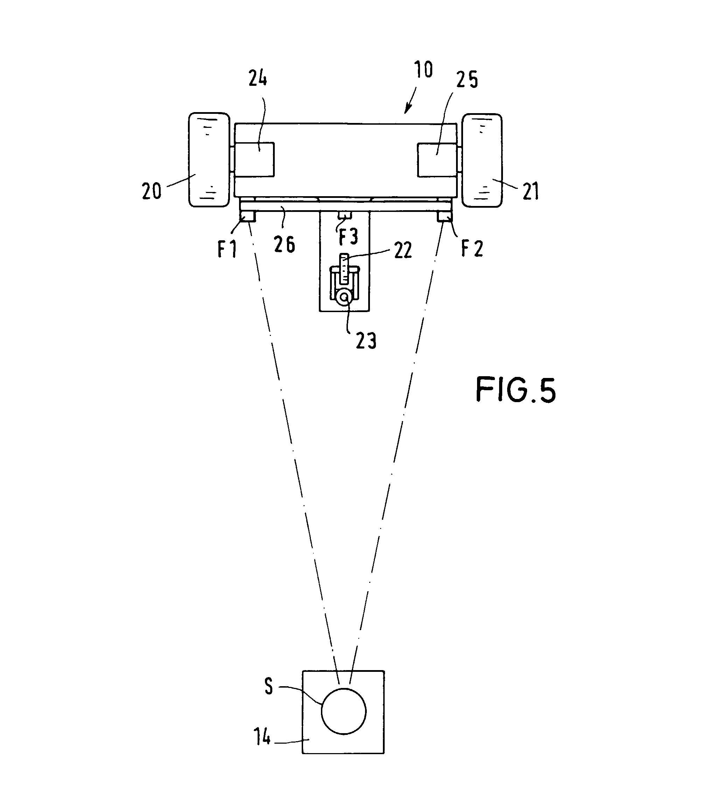

Fig. 5 zeigt ein Fahrzeug 10 in Form eines Golfwagens mit zwei angetriebenen Rädern 20,21 und einem selbsteinstellenden dritten Stützrad 22, das um eine Hochachse 23 schwenkbar ist. Das Stützrad 22 ist durch eine Federvorrichtung auf Geradeausfahrt zentriert. Wenn das vom Boden auf das Stützrad 22 ausgeübte Lenkmoment einen bestimmten Grenzwert übersteigt, wird die Kraft der Federvorrichtung überwunden. Ein Ausschwenken des Stützrades aus der für Geradeausfahrt geeigneten Richtung ist daher nur gegen eine rückstellende Federkraft möglich. Die Räder 20,21 sind von Motoren 24,25 einzeln antreibbar. Bei Geradeausfahrt laufen die Motore 24,25 mit gleichen Geschwindigkeiten. Für die Kurvenfahrt werden sie mit unterschiedlichen Geschwindigkeiten angetrieben, wobei die Differenzgeschwindigkeit den Radius der gefahrenen Kurve festlegt.

Die Ultraschalleinheiten F1,F2 sind bei diesem Ausführungsbeispiel Empfangseinheiten, die nur empfangen können. Als Sendeeinheit dient die Ultraschalleinheit F3. Alle drei Ultraschalleinheiten F1,F2,F3 sind an einem gemeinsamen Gehäuse 26 angebracht, das als Querbalken zum Fahrzeug 10 ausgebildet ist. Das Gehäuse 26 enthält die elektronischen Komponenten der ersten Steuereinheit 13. Die gesamte Auswerteeinheit ist somit als selbständige Baueinheit in bzw. an dem Gehäuse 26 montiert. Die sendende Ultraschalleinheit F3 und die empfangenden Ultraschalleinheiten F1,F2 arbeiten mit der mobilen Steuereinheit 14 zusammen, die der vorausgehende Golfspieler am Körper trägt.

Die erste Steuereinheit und/oder die zweite Steuereinheit nimmt einen Wartezustand mit verringertem Energieverbrauch ein, wenn sie über eine vorgegebene Zeitspanne keine Signale von der anderen Steuereinheit empfängt. Dadurch wird der Energieverbrauch verringert.

Die Steuereinheit 14 des Schrittmachers wird durch eine wiederaufladbare Batterie gespeist, die bei Stillstand in einer Einschubbox am Fahrzeug gesteckt werden kann, in der sie durch die Fahrzeugbatterie geladen wird.

Bei einer (nicht dargestellten) weiteren Ausführungsform der Erfindung enthält die erste Steuereinheit eine Ultraschalleinheit, die als Sender mit einer ersten Frequenz f₁ arbeitet, und zwei weitere Ultraschalleinheiten, die als Empfänger auf einer von f₁ unterschiedlichen zweiten Frequenz f₂ arbeiten. Die mobile zweite Steuereinheit enthält eine Ultraschalleinheit, die als Empfänger auf der ersten Frequenz f₁ arbeitet, und eine weitere Ultraschalleinheit, die als Sender auf der Frequenz f₂ arbeitet. Die Frequenzen f₁ und f₂ liegen vorzugsweise zwischen 20 und 50 kHz, insbesondere bei 25 kHz und 40 kHz.

Die Frequenz kann an den Ultraschalleinheiten der ersten und der zweiten Steuereinheit verstellbar sein (z.B. auf jeweils 23 kHz, 25 kHz oder 27 kHz), wodurch Golfspieler, die zufällig in einem Flight zusammentreffen, die Folgesteuerungen ihrer Fahrzeuge gegenseitig störungsfrei aufeinander einstellen können.

Schließlich kann eine zusätzliche, unabhängig wirkende Notstoppeinrichtung in die erste Steuereinheit integriert sein. Die Notstoppeinrichtung mißt die Laufzeit von Ultraschallimpulsen von der ersten Steuereinheit zu einem eventuellen Hindernis und der von dem Hindernis reflektierten Schallimpulse zurück zur ersten Steuereinheit. Liegt diese Laufzeit unterhalb einer vorgegebenen Mindestlaufzeit, hält die Notstoppeinrichtung das Fahrzeug an.

## Patentansprüche

1. Ultraschall-Folgesteuerung für ein selbstfahrendes Fahrzeug, mit
einer am Fahrzeug (10) angebrachten ersten Steuereinheit (13), die Fahr- und Lenksignale für den Fahrbetrieb des Fahrzeugs liefert, und mehreren Ultraschalleinheiten (F1,F2), von denen mindestens zwei zum Empfangen und mindestens einer zum Senden ausgebildet ist,
und einer vom Fahrzeug (10) unabhängigen mobilen zweiten Steuereinheit (14), die mindestens einen auf die Ultraschallsignale der sendenden Ultraschalleinheiten (F1,F2;F3) antwortenden Transponder (S) aufweist,
wobei die erste Steuereinheit (13) aus den Signalen, die sie von der zweiten Steuereinheit (14) empfängt, durch Messung der Zeit zwischen dem Aussenden eines Signals und dem Empfangen des Antwortsignals Betrag und Richtung des Abstands des Fahrzeugs (10) von der zweiten Steuereinheit (14) ermittelt und die Fahr- und Lenksignale derart erzeugt, daß das Fahrzeug (10) der zweiten Steuereinheit (14) mit einem vorbestimmten Abstand folgt.

2. Folgesteuerung nach Anspruch 1, dadurch gekennzeichnet, daß die zweite Steuereinheit (14) für jede Ultraschalleinheit (F1,F2) der ersten Steuereinheit (13) einen eigenen Transponder (S1,S2) aufweist, wobei die Paare aus Ultraschalleinheit und Transponder selektiv und übersprechfrei betrieben sind.

3. Folgesteuerung nach Anspruch 1, dadurch gekennzeichnet, daß in der ersten Steuereinheit eine Ultraschalleinheit (F₁) als Sender mit einer ersten Frequenz f₁ und zwei andere Ultraschalleinheiten als Empfänger auf einer von f₁ unterschiedlichen zweiten Frequenz f₂ arbeiten, und daß in der zweiten Steuereinheit (14) eine Ultraschalleinheit als Empfänger auf der Frequenz f₁ und eine zweite Ultraschalleinheit als Sender auf der Frequenz f₂ arbeitet.

4. Folgesteuerung nach Anspruch 3, dadurch gekennzeichnet, daß die Frequenzen f₁ und f₂ zwischen 20 und 50 kHz, vorzugsweise bei 25 kHz und 40 kHz, liegen.

5. Folgesteuerung nach einem der Ansprüche 1-4, dadurch gekennzeichnet, daß die Frequenz an den Ultraschalleinheiten der ersten und der zweiten Steuereinheit verstellbar ist (z.B. auf jeweils 23 kHz, 25 kHz oder 27 kHz), wodurch jeweils zufällig in einem Flight zusammentreffende Golfspieler die Folgesteuerungen ihrer Fahrzeuge gegenseitig störungsfrei aufeinander einstellen können.

6. Folgesteuerung nach einem der Ansprüche 1-5, dadurch gekennzeichnet, daß die Ultraschalleinheiten (F1,F2) derart gesteuert sind, daß sie in jeweiligen Aktivzeiten (T1-T4) Signale in ungleichmäßigen Zeitabständen aussenden, wobei eine Gruppe von durch ungleichmäßige Zeitabstände getrennten Aktivzeiten (T1-T4) eine sich wiederholende, für das Fahrzeug (10) charakteristische Sequenz (Q1) bildet, und daß die zugehörige zweite Steuereinheit (14) die charakteristische Sequenz (Q1) des zugehörigen Fahrzeugs (A) gespeichert enthält und nur solche Signale der ersten Steuereinheit (13) beantwortet, die mit den Aktivzeiten (T1-T4) der Sequenz (Q1) zusammenfallen.

7. Folgesteuerung nach einem der Ansprüche 1-6, dadurch gekennzeichnet, daß die erste Steuereinheit (13) das Fahrzeug (10) stillsetzt, wenn sie eine vorgebene Anzahl von Malen auf ein ausgesandtes Signal hin innerhalb einer vorgegebenen Zeitspanne kein Antwortsignal des Transponders (S) empfängt.

8. Folgesteuerung nach einem der Ansprüche 1-7, dadurch gekennzeichnet, daß die zweite Steuereinheit (14) einen Schalter zum Abschalten des Transponders (S) aufweist.

9. Folgesteuerung nach einem der Ansprüche 1-8, dadurch gekennzeichnet, daß die erste Steuereinheit (13) und/oder die zweite Steuereinheit (14) einen Wartezustand mit verringertem Energieverbrauch einnimmt, wenn sie über eine vorgegebene Zeitspanne keine Signale der anderen Steuereinheit empfängt.

10. Folgesteuerung nach einem der Ansprüche 1-9, dadurch gekennzeichnet, daß die erste Steuereinheit (13) neue Werte von Betrag und Richtung des Abstands der zweiten Steuereinheit (14) aufgrund eines Signalaustausches mit dem Transponder (S) nur dann auswertet, wenn die neuen Werte eine vorgegebene Differenz zu den zuletzt geltenden Werten nicht überschreiten.

11. Folgesteuerung nach einem der Ansprüche 1-10, dadurch gekennzeichnet, daß der Folgewinkel (a), den bei dem vorbestimmten Abstand die zweite Steuereinheit (14) zur Fahrzeuglängsachse (12) einnimmt, einstellbar ist, derart, daß das Fahrzeug (10) der zweiten Steuereinheit (14) mit seitlichem Versatz folgt.

12. Folgesteuerung nach einem der Ansprüche 1-11, dadurch gekennzeichnet, daß das Fahrzeug (10) ein Golfwagen mit zwei durch separate Motore (24,25) angetriebenen Rädern (20,21) und einem selbsteinstellenden Stützrad (22) ist, wobei die erste Steuereinheit (13) zum Lenken die Geschwindigkeiten der beiden Motore (24,25) steuert.

13. Folgesteuerung nach Anspruch 12, dadurch gekennzeichnet, daß eine Federvorrichtung vorgesehen ist, die das Ausschwenken des Stützrades (22) aus der für Geradeausfahrt geeigneten Richtung nur bei Überwindung eines Grenzmomentes zuläßt.

14. Folgesteuerung nach einem der Ansprüche 1-13, dadurch gekennzeichnet, daß die erste Steuereinheit (13), die die Lenksignale erzeugt, in einem Gehäuse (26) untergebracht ist, welches zugleich die Ultraschalleinheiten (F1,F2,F3) trägt und als langgestreckte Leiste ausgebildet ist.

15. Folgesteuerung nach einem der Ansprüche 1-14, dadurch gekennzeichnet, daß in die erste Steuereinheit (13) eine zusätzliche, unabhängig wirksame Notstoppeinrichtung integriert ist, welche die Laufzeit von Ultraschallimpulsen aus dieser ersten Steuereinheit zu eventuellen Hindernissen und der reflektierten Schallimpulse zurück zur ersten Steuereinheit mißt und bei Empfang von Ultraschallimpulsen innerhalb einer Mindestlaufzeit das Fahrzeug stoppt.

## Claims

1. An ultrasonic tracking control unit for an automotive vehicle, comprising
a first control unit (13) supplying traveling and steering signals for the traveling operation of the vehicle and being arranged on the vehicle (10), and several ultrasonic units (F1,F2) of which at least two are configured for reception and at least one is configured for transmission,
and a mobile second control unit (14) independent of the vehicle (10) and comprising at least one transponder (S) responding to the ultrasonic signals of the transmitting ultrasonic units (F1,F2;F3),
wherein the first control unit (13) detects the amount and direction of the distance of the vehicle (10) from the second control unit (14) by measuring the time between the emission of a signal and the reception of the response signal, and generates the traveling and steering signals such that the vehicle (10) tracks the second control unit (14) at a predetermined distance.

2. The tracking control according to claim 1, wherein the second control unit (14) comprises a transponder (S1,S2) of its own for each ultrasonic unit (F1,F2) of the first control unit (13), the pairs of ultrasonic unit and transponder being operated selectively and cross-talk-proof.

3. The tracking control according to claim 1, wherein in the first control unit an ultrasonic unit (F₁) operates as a transmitter at a first frequency f₁ and two other ultrasonic units operate as receivers at a second frequency f₂ different from f₁, and wherein in the second control unit (14) an ultrasonic unit operates as a receiver at the frequency f₁ and a second ultrasonic unit operates as a transmitter at the frequency f₂.

4. The tracking control according to claim 3, wherein the frequencies f₁ and f₂ are between 20 and 50 kHz, preferably at 25 kHz and 40 kHz.

5. The tracking control according to one of the claims 1 - 4, wherein the frequency is adjustable at the ultrasonic units of the first and second control units (e.g., to 23 kHz, 25 kHz, or 27 kHz, respectively), whereby golf players meeting accidentally in a flight can each adapt the tracking controls of their vehicles to each other so as to avoid mutual disturbances.

6. The tracking control according to one of the claims 1 - 5, wherein ultrasonic units (F1,F2) are controlled such that they emit signals at non-uniform time intervals in respective active times (T1-T4), a group of active times (T1-T4) separated by non-uniform time intervals forming a repeating sequence (Q1) characteristic for the vehicle (10), and wherein the characteristic sequence (Q1) of the associated vehicle (A) is stored in the associated second control unit (14) which only responds to such signals of the first control unit (13) coinciding with the active times (T1-T4) of the sequence (Q1).

7. The tracking control according to one of the claims 1 - 6, wherein the first control unit (13) stops the vehicle (10) if it does not receive any response signal of the transponder (S) in response to an emitted signal for a predetermined number of times within a predetermined time period.

8. The tracking control according to one of the claims 1 - 7, wherein the second control unit (14) comprises a switch for switching off the transponder (S).

9. The tracking control according to one of the claims 1 - 8, wherein the first control unit (13) and/or the second control unit (14) assume a waiting state with reduced energy consumption if it does not receive any signals of the other control unit over a predetermined period of time.

10. The tracking control according to one of the claims 1 - 9, wherein the first control unit (13) evaluates new values of amount and direction of the distance of the second control unit (14) on the basis of a signal exchange with the transponder (S) only if the new values do not exceed a predetermined difference to the last valid values.

11. The tracking control according to one of the claims 1 - 10, wherein the tracking angle (a) assumed by the second control unit (14) with respect to the vehicle longitudinal axis (12) at the predetermined distance is adjustable such that the vehicle (10) tracks the second control unit (14) with lateral offset.

12. The tracking control according to one of the claims 1 - 11, wherein the vehicle (10) is a golf caddie with two wheels (20,21) driven by separate motors (24,25) and a self-adjusting castor wheel (22), the first control unit (13) driving the speeds of the two motors (24,25) for steering.

13. The tracking control according to claim 12, wherein a spring device is provided which permits the castor wheel (22) to deviate from the direction suitable for straight travel only if a limit moment is exceeded.

14. The tracking control according to one of the claims 1 - 13, wherein the first control unit (13) generating the steering signals is accommodated in a housing (26) which also carries the ultrasonic units (F1,F2,F3) and is configured as an elongated strip.

15. The tracking control according to one of the claims 1 - 14, wherein an additional, independently acting emergency stop means is integrated in the first control unit (13), which measures the time of transmission of ultrasonic pulses from said first control unit to possible obstacles and of the reflected sound pulses back to the first control unit and stops the vehicle upon reception of ultrasonic pulses within a minimum transmission time.

## Revendications

1. Commande de poursuite à ultrasons pour véhicule sans conducteur, comprenant
- une première unité de commande (13), installée sur le véhicule (10) qui fournit des signaux de conduite et de direction pour l'exploitation en marche du véhicule, et plusieurs unités à ultrasons (F1, F2) dont au moins deux sont réalisées pour la réception et au moins une pour l'émission,
- et une deuxième unité de commande (14) mobile, indépendante du véhicule (10), qui présente au moins un transpondeur (S) répondant aux signaux ultrasoniques des unités émettrices à ultrasons (F1, F2; F3),
- la première unité de commande (13) déterminant, à partir des signaux qu'elle reçoit de la deuxième unité de commande (14), en mesurant le temps entre l'émission d'un signal et la réception du signal de réponse, la grandeur et la direction de la distance du véhicule (10) par rapport à la deuxième unité de commande (14) et générant les signaux de conduite et de direction de telle sorte que le véhicule (10) suit la deuxième unité de commande (14) à une distance prédéterminée.

2. Commande de poursuite selon la revendication 1, caractérisée en ce que la deuxième unité de commande (14) présente pour chaque unité à ultrasons (F1, F2) de la première unité de commande (13) un transpondeur (S1, S2) propre, les paires composées d'une unité à ultrasons et d'un transpondeur étant exploitées de façon sélective et sans diaphonie.

3. Commande de poursuite selon la revendication 1, caractérisée en ce que dans la première unité de commande, une unité à ultrasons (F₁) fonctionne comme émetteur à une première fréquence f₁ et deux autres unités à ultrasons fonctionnent comme récepteurs à une deuxième fréquence f₂ différente de f₁, et en ce que dans la deuxième unité de commande (14), une unité à ultrasons fonctionne comme récepteur à la fréquence f₁ et une deuxième unité à ultrasons fonctionne comme émetteur à la fréquence f₂.

4. Commande de poursuite selon la revendication 3, caractérisée en ce que les fréquences f₁ et f₂ se trouvent entre 20 et 50 kHz, de préférence à 25 kHz et 40 kHz.

5. Commande de poursuite selon l'une quelconque des revendications 1 à 4, caractérisée en ce que la fréquence des unités à ultrasons de la première et de la deuxième unité de commande est réglable (par exemple respectivement sur 23 kHz, 25 kHz ou 27 kHz), ce qui permet à des joueurs de golf qui se rencontrent par hasard, au cours d'une partie, de régler leurs véhicules les uns par rapport aux autres sans interférence.

6. Commande de poursuite selon l'une quelconque des revendications 1 à 5, caractérisée en ce que les unités à ultrasons (F1, F2) sont commandées de sorte qu'elles émettent des signaux à intervalles de temps irréguliers pendant des durées actives respectives (T1 à T4), un groupe de durées actives respectives (T1 à T4), séparées par des intervalles irréguliers, formant une séquence (Q1) caractéristique pour le véhicule (10) et qui se répète, et en ce que la deuxième unité de commande associée (14) contient en mémoire la séquence caractéristique (Q1) du véhicule associé (A) et répond seulement aux signaux de la première unité de commande (13) qui coïncident avec les durées actives (T1 à T4) de la séquence (Q1).

7. Commande de poursuite selon l'une quelconque des revendications 1 à 6, caractérisée en ce que la première unité de commande (13) arrête le véhicule (10) quand, suite à un signal émis, elle ne reçoit pas de signal de réponse du transpondeur (S) pendant un nombre prédéterminé de fois dans la limite d'un laps de temps prédéterminé.

8. Commande de poursuite selon l'une quelconque des revendications 1 à 7, caractérisée en ce que la deuxième unité de commande (14) présente un commutateur pour déconnecter le transpondeur (S).

9. Commande de poursuite selon l'une quelconque des revendications 1 à 8, caractérisée en ce que la première unité de commande (13) et/ou la deuxième unité de commande (14) adopte un état de veille avec une consommation d'énergie réduite quand elle ne reçoit pas de signaux de l'autre unité de commande pendant un laps de temps prédéterminé.

10. Commande de poursuite selon l'une quelconque des revendications 1 à 9, caractérisée en ce que la première unité de commande (13) exploite de nouvelles valeurs de grandeur et de direction de la distance de la deuxième unité de commande (14) sur la base d'un échange de signaux avec le transpondeur (S), uniquement si les nouvelles valeurs ne dépassent pas une différence prédéterminée par rapport aux valeurs valables en dernier.

11. Commande de poursuite selon l'une quelconque des revendications 1 à 10, caractérisée en ce que l'angle de poursuite (α), que la deuxième unité de commande (14) adopte à la distance prédéterminée par rapport à l'axe longitudinal de véhicule (12), est réglable de sorte que le véhicule (10) suit la deuxième unité de commande (14) avec un décalage latéral.

12. Commande de poursuite selon l'une quelconque des revendications 1 à 11, caractérisée en ce que le véhicule (10) est un chariot de golf ayant deux roues (20, 21) entraînées par des moteurs séparés (24, 25) et une roue support auto-orientable (22), la première unité de commande (13) commandant les vitesses des deux moteurs (24, 25) pour la direction.

13. Commande de poursuite selon la revendication 12, caractérisée en ce qu'il est prévu un dispositif à ressort qui permet l'orientation de la roue support (22) par rapport à la direction appropriée pour la marche avant uniquement en cas de dépassement d'un couple limite.

14. Commande de poursuite selon l'une quelconque des revendications 1 à 13, caractérisée en ce que la première unité de commande (13), qui génère les signaux de direction, est logée dans un boîtier (26) qui supporte en même temps les unités à ultrasons (F1, F2, F3) et est réalisé comme une baguette allongée.

15. Commande de poursuite selon l'une quelconque des revendications 1 à 14, caractérisée en ce que dans la première unité de commande (13) est intégré un dispositif d'arrêt d'urgence supplémentaire, agissant de façon indépendante, qui mesure le temps de propagation d'impulsions ultrasoniques de cette première unité de commande jusqu'à des obstacles éventuels, et des impulsions acoustiques réfléchies vers la première unité de commande, et qui arrête le véhicule en cas de réception d'impulsions ultrasoniques dans la limite d'un temps de propagation minimal.
